# EUROPEAN PATENT APPLICATION

(11) **EP 4 489 183 A1**
(43) Date of publication of application: **08.01.2025**
(21) Application number: 23184202.2
(22) Date of filing: 07.07.2023
(51) Int. Cl.: H01M 10/613, H01M 10/625, H01M 10/647, H01M 10/6556, H01M 50/103

(54) **A PRISMATIC BATTERY CELL, A BATTERY ASSEMBLY, AN ELECTRIC ENERGY STORAGE SYSTEM, AND A VEHICLE**

(71) Applicant: VOLVO TRUCK CORPORATION, 405 08 Göteborg (SE)
(72) Inventor: BHAVANI SHANKAR, Vijai Shankar, 414 78 Göteborg (SE)
(74) Representative: Valea AB

(57) **Abstract**

The disclosure relates to a prismatic battery cell (1) for an electric energy storage system (3), the prismatic battery cell extending in a longitudinal direction (L), a width direction (W) and a height direction (H), the prismatic battery cell (1) comprising:
- an outer casing (10) for enclosing an electrochemical cell, the outer casing (10) having a longitudinal extension (L1) in the longitudinal direction (L) and a width extension (W1) in the with direction (W),

wherein the outer casing (10) comprises a bottom end section (12), as seen in the height direction (H),
wherein the bottom end section (12) comprises a recess (14) for coolant, and
wherein the recess (14) for coolant extends in the longitudinal direction (L) from a coolant inlet portion (142) to a coolant outlet portion (144). A battery assembly (2), an electrical energy storage system (3) and a vehicle (4) is also disclosed.

## Description

### TECHNICAL FIELD

The disclosure relates generally to electric energy storage systems. In particular aspects, the disclosure relates to a prismatic battery cell for an electric energy storage system, a battery assembly for an electric energy storage system, an electric energy storage system, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle. The disclosure may also be applied to stationary machinery.

### BACKGROUND

An electric energy storage system, such as a high-voltage electric energy storage system, typically comprises a plurality of electrochemical battery cells which are electrically connected to each other, i.e., connected in series and/or in parallel. The electrochemical battery cell typically comprises a casing enclosing the electrochemical cell. It is known to provide prismatic battery cells and cylindrical battery cells. The prismatic battery cell has a casing formed as a prism, e.g., with rectangular shaped sides and a rectangular shaped base, and the cylindrical cell has a casing formed as a cylinder, typically with a circular base.

During use, the electrochemical cells generate heat, and also, the electrochemical cells may be exposed to high ambient temperatures. Since the performance and service life of the electrochemical cells may be negatively affected by too high temperatures, there may be a need to cool the electrochemical cells during use, such as by a cooling system comprising one or more coolant conduits.

In view of the above, there is a strive to develop improved technology relating to cooling of prismatic battery cells, battery assemblies and electric energy storage systems.

### SUMMARY

According to a first aspect of the disclosure, a prismatic battery cell for an electric energy storage system according to claim 1 is provided. Thus, there is provided a prismatic battery cell for an electric energy storage system, wherein the prismatic battery cell extends in a longitudinal direction, a width direction and a height direction. The prismatic battery cell comprises:
- an outer casing for enclosing an electrochemical cell, the outer casing having a longitudinal extension in the longitudinal direction and a width extension in the with direction,

wherein the outer casing comprises a bottom end section, as seen in the height direction, wherein the longitudinal extension of the outer casing is longer than the width extension of the outer casing, as seen in a sectional plane at the bottom end section which is perpendicular to the height direction,
wherein the bottom end section comprises a recess for coolant,
wherein the recess for coolant is having a coolant inlet portion and a coolant outlet portion, wherein the coolant inlet portion is located at a first end side of the bottom end section and the coolant outlet portion is located at an opposite second end side of the bottom end section, as seen in the longitudinal direction, and wherein the recess for coolant extends in the longitudinal direction from the coolant inlet portion to the coolant outlet portion. The first aspect of the disclosure may seek to provide improved cooling for a prismatic battery cell in a cost-effective manner. A technical benefit may include that by integrating a coolant conduit in the outer casing, i.e., by the recess for coolant, improved cooling may be achieved in a cost-effective manner. This in turn implies improved performance and increased service life. For example, the orientation of the recess for coolant has been shown to provide increased heat dissipation to the coolant, implying more beneficial cooling during use. As another example, the orientation of the recess for coolant has been shown to provide compact packaging possibilities of connected prismatic battery cells while also providing more homogenous cooling between the cells.

Optionally in some examples, including in at least one preferred example, the bottom end section comprises a first wall segment and a second wall segment, wherein each one of the first and second wall segments extends in the longitudinal direction between the first end side and the second end side and wherein the first and second wall segments are offset from each other in the width direction such that the first and second wall segments define the recess for coolant therebetween. A technical benefit may include improved integration of the recess for coolant to the outer casing, implying reliable cooling and a cost-effective configuration.

Optionally in some examples, including in at least one preferred example, the first and second wall segments are respective outer wall segments of the outer casing. A technical benefit may include improved integration of the recess for coolant to the outer casing, improved packaging possibilities, e.g., a smoother outer profile of the outer casing may be provided.

Optionally in some examples, including in at least one preferred example, the bottom end section comprises at least one intermediate wall segment, wherein the at least one intermediate wall segment extends in the longitudinal direction between the first end side and the second end side and wherein the at least intermediate wall segment is located in-between the first and second wall segments, as seen in the width direction, such that the recess for coolant comprises two or more sub-recesses for coolant. A technical benefit may include a more turbulent flow in the recess for coolant, e.g., caused by an increased friction between the coolant and the recess for coolant. This may imply further improved cooling.

Optionally in some examples, including in at least one preferred example, the bottom end section comprises at least one sealing element configured to seal the recess for coolant along the longitudinal direction with respect to a support surface when the bottom end section is supported on the support surface. A technical benefit may include reduced risk of coolant leakage, implying improved cooling and a more reliable and robust configuration.

Optionally in some examples, including in at least one preferred example, the at least one sealing element is provided on a bottom portion of the first and/or second wall segment. A technical benefit may include improved integration of the sealing element(s) to the outer casing. This may imply a cost-effective configuration and/or reduced coolant leakage.

Optionally in some examples, including in at least one preferred example, the at least one sealing element is provided in a sealing element recess of the bottom portion. A technical benefit may include improved integration of the sealing element(s) to the outer casing. This may imply a cost-effective configuration and/or reduced coolant leakage.

Optionally in some examples, including in at least one preferred example, the outer casing comprises four side walls for enclosing the electrochemical cell, wherein the four side walls extend in the height direction between the bottom end section and a top section of the prismatic battery cell, wherein the four side walls and the bottom end section are made of one single piece of material. A technical benefit may include a more cost-effective configuration, i.e., with the recess for coolant integrated in the one single piece of material.

Optionally in some examples, including in at least one preferred example, the outer casing is made by impact extrusion. A technical benefit may include a cost-effective manufacturing of the outer casing.

According to a second aspect of the disclosure, a battery assembly for an electric energy storage system according to claim 6 is provided. Thus, there is provided a battery assembly for an electric energy storage system, the battery assembly comprising at least two prismatic battery cells which are arranged side-by-side to each other, wherein each one of the at least two prismatic battery cells is a prismatic battery cell according to any one of the examples of the first aspect of the disclosure. The second aspect of the disclosure may seek to provide improved cooling for a battery assembly in a cost-effective manner. For example, the orientation of the recesses for coolant has been shown to provide compact packaging possibilities of connected prismatic battery cells while also providing more homogenous cooling between the cells.

Optionally in some examples, including in at least one preferred example, the battery assembly further comprises a bottom support member, wherein the bottom end sections of the at least two prismatic battery cells are supported by a support surface of the bottom support member. A technical benefit may include that the recesses for coolant and the support surface form coolant conduits for the prismatic battery cells in a reliable and robust manner.

Optionally in some examples, including in at least one preferred example, at least two prismatic battery cells of the at least two prismatic battery cells, forming a first set of prismatic battery cells, are arranged side-by-side to each other such that their recesses for coolant form substantially parallel coolant flows. A technical benefit may include a more homogenous cooling, implying improved cooling of the prismatic battery cells. For example, parallel coolant flows may imply that the temperatures of the coolant at the inlets of the recesses for coolant can be substantially the same, or at least not diverging too much, in contrast to inlet temperatures of a serial coolant flow.

Optionally in some examples, including in at least one preferred example, the battery assembly further comprises at least one first coolant distribution member located proximate the inlet portions of the first set of prismatic battery cells, wherein the first coolant distribution member is configured to supply coolant to the inlet portions of the first set of prismatic battery cells. A technical benefit may include a more reliable and robust configuration, implying e.g., improved cooling efficiency.

Optionally in some examples, including in at least one preferred example, the battery assembly further comprises at least one second coolant distribution member located proximate the outlet portions of the first set of prismatic battery cells, wherein the second coolant distribution member is configured to discharge coolant from the outlet portions of the first set of prismatic battery cells. A technical benefit may include a more reliable and robust configuration, implying e.g., improved cooling efficiency.

Optionally in some examples, including in at least one preferred example, at least two prismatic battery cells in addition to the first set of prismatic battery cells, forming a second set of prismatic battery cells, are arranged side-by-side to each other such that their recesses for coolant form substantially parallel coolant flows, and wherein the first and second sets of prismatic battery cells are arranged such that the outlet portions of the first set of prismatic battery cells are facing the inlet portions of the second set of prismatic battery cells. A technical benefit may include a more compact packaging while at the same time providing more homogenous cooling of the battery cells of each respective set of prismatic battery cells.

Optionally in some examples, including in at least one preferred example, the battery assembly further comprises at least one intermediate common coolant distribution member for the first and second sets of prismatic battery cells which is located in-between the first and second sets of prismatic battery cells, wherein the intermediate common coolant distribution member is configured to discharge coolant from the outlet portions of the first set of prismatic battery cells and to supply coolant to the inlet portions of the second set of prismatic battery cells. A technical benefit may include a more reliable and robust configuration, implying e.g., improved cooling efficiency.

Optionally in some examples, including in at least one preferred example, at least two prismatic battery cells of the at least two prismatic battery cells are arranged side-by-side to each other such that their recesses for coolant form a substantially aligned coolant flow therebetween. A technical benefit may include improved packaging of the prismatic battery cells.

Optionally in some examples, including in at least one preferred example, any one of the first coolant distribution member, the second coolant distribution member, and the intermediate common coolant distribution member, is configured such that a coolant flow therein is arranged to flow in a direction which is substantially perpendicular to coolant flow directions in the recesses for coolant of the at least two prismatic battery cells of the battery assembly. A technical benefit may include a more compact packaging of the prismatic battery cells.

According to a third aspect of the disclosure, an electric energy storage system according to claim 14 is provided. Thus, there is provided an electric energy storage system, comprising a prismatic battery cell according to any one of the examples of the first aspect of the disclosure and/or a battery assembly according to any one of the examples of the second aspect of the disclosure. The third aspect of the disclosure may seek to provide improved cooling for a electric energy storage system in a cost-effective manner. For example, the orientation of the at least one recess for coolant has shown to provide compact packaging possibilities of connected prismatic battery cells while also providing more homogenous cooling between the cells.

According to a fourth aspect of the disclosure, a vehicle according to claim 15 is provided. Thus, there is provided a vehicle comprising an electric energy storage system according to any one of the examples of the third aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2a** is an exemplary prismatic battery cell in a perspective view according to an example.
**FIGS. 2b****-d** are exemplary prismatic battery cells shown from below according to examples.
**FIGS. 3a****-b** are exemplary battery assemblies in side views according to examples.
**FIG. 4a****-c** are exemplary battery assemblies in schematic views according to examples.
**FIG. 5** is a flowchart of a method according to an example.

The drawings are not necessarily drawn to scale. It shall also be noted that some details in the drawings may be exaggerated in order to better describe and illustrate the particular example. Like reference characters refer to like elements throughout the description, unless expressed otherwise.

### DETAILED DESCRIPTION

The detailed description set forth below provides information and examples of the disclosed technology with sufficient detail to enable those skilled in the art to practice the disclosure.

The present disclosure may seek to provide improved cooling for a prismatic battery cell, a battery assembly, and/or an electric energy storage system in a cost-effective manner. For example, the electric energy storage system may be a high voltage electric energy storage system, such as with a voltage of at least 60 V, or at least 100 V, 200 V or 300 V. The electric energy storage system may be used for providing power to one or more electrical consumers of a vehicle, such as to one or more electric motors for generating propulsion force. The electric energy storage system may alternatively be a stationary system, such as for storing electric energy which can be provided to an electrical grid network. An aim of the present disclosure may be to provide an improved prismatic battery cell which at least partially alleviates one or more drawbacks of the prior art, or which at least provides a suitable alternative. Other aims of the present disclosure may be to provide a battery assembly, an electric energy storage system, a vehicle, and a method which at least partially alleviate one or more drawbacks of the prior art, or which at least provide suitable alternatives.

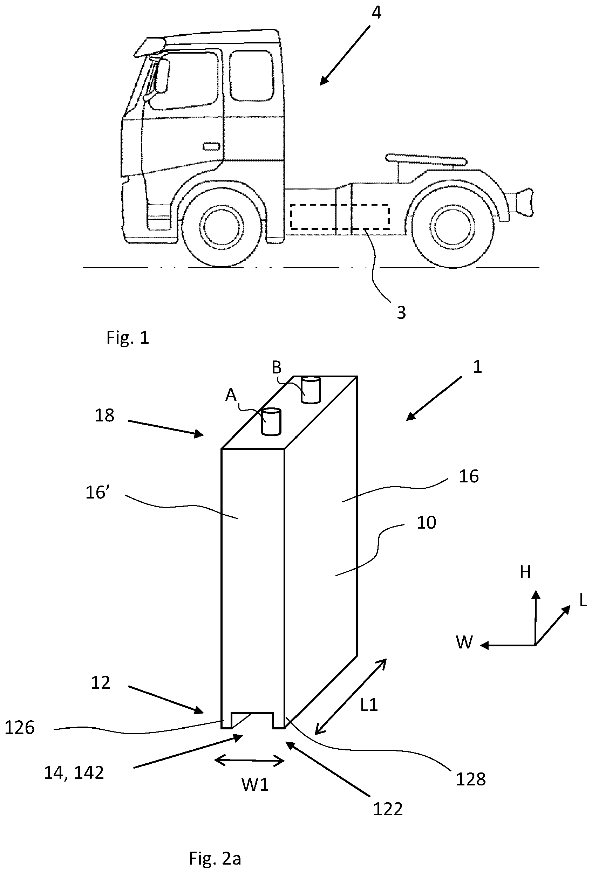

**FIG. 1** is an exemplary vehicle 4 in a side view according to an example. The vehicle 4 is in this example a heavy-duty truck. More specifically, the vehicle 4 is a towing truck for towing one or more trailers (not shown). It shall however be noted that the present disclosure is not limited to this type of vehicle, but any other vehicle may be used, such as a bus, a passenger car, and construction equipment, such as a wheel loader, a dump truck, an excavator etc. The vehicle may also be a marine vessel, such as a boat or a ship. The vehicle 4 comprises an electric energy storage system 3 according to the present disclosure. The electric energy storage system 3 may be a high-voltage electric energy storage system adapted to power one or more electrical consumers, such as one or more electric motors (not shown) for generating a propulsion force to the vehicle 4.

**FIG. 2a** is a prismatic battery cell 1 in a perspective view according to an example of the present disclosure. The prismatic battery cell 1 may for example be a battery cell of the electric energy storage system 3 shown in FIG. 1. For example, the electric energy storage system 3 may comprise tens or hundreds of prismatic battery cells 1 as shown in FIG. 2a, which are electrically connected in series and/or in parallel. In the shown example, the prismatic battery cell 1 is rectangular shaped.

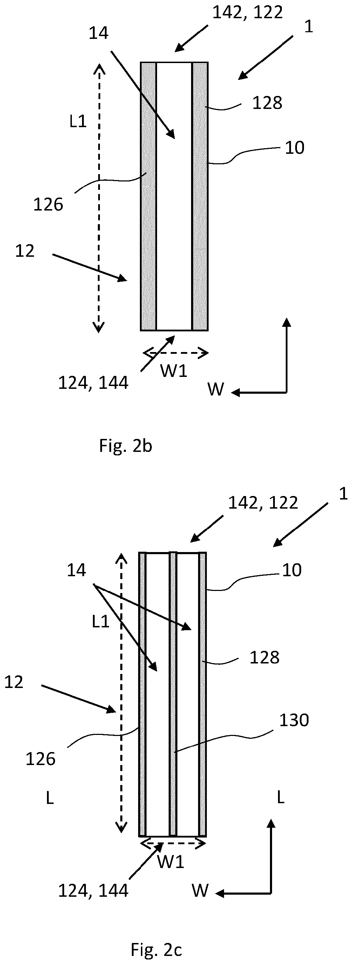

**FIGS. 2b** shows the prismatic battery cell 1 in FIG. 2a from below.

The prismatic battery cell 1 extends in a longitudinal direction L, a width direction W and a height direction H. The directions L, W and H herein are perpendicular to each other, and may e.g. be defined according to a Cartesian coordinate system.

As shown, the prismatic battery cell 1 comprises two electrodes A, B, in the shown example located at the top of the prismatic battery cell 1.

The prismatic battery cell 1 comprises an outer casing 10 for enclosing an electrochemical cell (not shown). The outer casing 10 may for example be made of aluminum, or any other suitable material. The electrochemical cell may for example be a lithium-ion electrochemical cell, or any other type of cell for storing electric energy, i.e., by means of chemical energy. The outer casing 10 has a longitudinal extension L1 in the longitudinal direction L and a width extension W1 in the with direction W.

The outer casing 10 comprises a bottom end section 12, as seen in the height direction H, wherein the longitudinal extension L1 of the outer casing 10 is longer than the width extension W1 of the outer casing 10, as seen in a sectional plane at the bottom end section 12 which is perpendicular to the height direction H. By way of example, the longitudinal extension L1 may be at least two times longer than the width extension W1, such as at least three times longer or at least four times longer than the width extension W1.

The bottom end section 12 comprises a recess 14 for coolant. Accordingly, the bottom end section 12 may correspond to, or at least partially correspond to, an extension of the recess 14 for coolant in the height direction H. The recess 14 for coolant is having a coolant inlet portion 142 and a coolant outlet portion 144.

The coolant inlet portion 142 is located at a first end side 122 of the bottom end section 12 and the coolant outlet portion 144 is located at an opposite second end side 124 of the bottom end section 12, as seen in the longitudinal direction L, and the recess 14 for coolant extends in the longitudinal direction L from the coolant inlet portion 142 to the coolant outlet portion 144. As shown in the example in FIGS. 2a-b, the recess 14 for coolant may extend in the longitudinal direction L in a substantially straight profile from the coolant inlet portion 142 to the coolant outlet portion 144.

As shown in e.g. FIG. 2a and FIG. 2b, the bottom end section 12 may comprise a first wall segment 126 and a second wall segment 128, wherein each one of the first and second wall segments 126, 128 extends in the longitudinal direction L between the first end side 122 and the second end side 124 and wherein the first and second wall segments 126, 128 are offset from each other in the width direction W such that the first and second wall segments 126, 128 define the recess 14 for coolant therebetween. By way of example, each one of the first and second wall segments 126, 128 may extend in the longitudinal direction L in a substantially straight profile between the first end side 122 and the second end side 124.

The first and second wall segments 126, 128 may as shown be respective outer wall segments of the outer casing 10.

**FIG. 2c** is an example of another configuration of a bottom end section 12. Similar to FIG. 2b, FIG. 2c also shows a prismatic battery cell 1 according to the disclosure from below. As shown, the bottom end section 12 may comprise at least one intermediate wall segment 130, wherein the at least one intermediate wall segment 130 extends in the longitudinal direction L between the first end side 122 and the second end side 124 and wherein the at least intermediate wall segment 130 is located in-between the first and second wall segments 126, 128, as seen in the width direction W, such that the recess 14 for coolant comprises two or more sub-recesses for coolant. The at least one intermediate wall segment 130 may as shown extend in the longitudinal direction L in a substantially straight profile between the first end side 122 and the second end side 124.

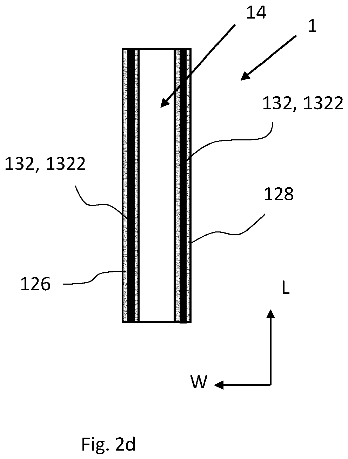

**FIG. 2d** is an example of another configuration of a bottom end section 12. Similar to FIG. 2b, FIG. 2d also shows a prismatic battery cell 1 according to the disclosure from below. As shown, the bottom end section 12 may comprise at least one sealing element 132 configured to seal the recess 14 for coolant along the longitudinal direction L with respect to a support surface (not shown in FIG. 2d) when the bottom end section 12 is supported on the support surface. For example, the at least one sealing element 132 may be made of a polymer, such as rubber. As shown, the at least one sealing element 132 is provided on a bottom portion of the first and/or second wall segment 126, 128. More specifically, in the shown example, the at least one sealing element 132 is provided in a sealing element recess 1322 of the bottom portion. As shown, a sealing element 132 may be provided on each one of the first and second wall segments 126, 128.

As further depicted in e.g., FIG. 2a, the outer casing 10 may comprise four side walls 16, 16' (only two of the side walls 16, 16' are shown in the perspective view) for enclosing the electrochemical cell, wherein the four side walls 16, 16' extend in the height direction H between the bottom end section 12 and a top section 18 of the prismatic battery cell 1. By way of example, the four side walls 16, 16' and the bottom end section 12 may be made of one single piece of material. Thereby, for example, the outer casing 10 may be made by impact extrusion, forming a single piece unit. As such, according to a further aspect of the present disclosure, a method for manufacturing a prismatic battery cell according to the first aspect of disclosure is provided, wherein the method comprises impact extruding a piece of material so that an outer casing according to an example of the first aspect of the disclosure is formed.

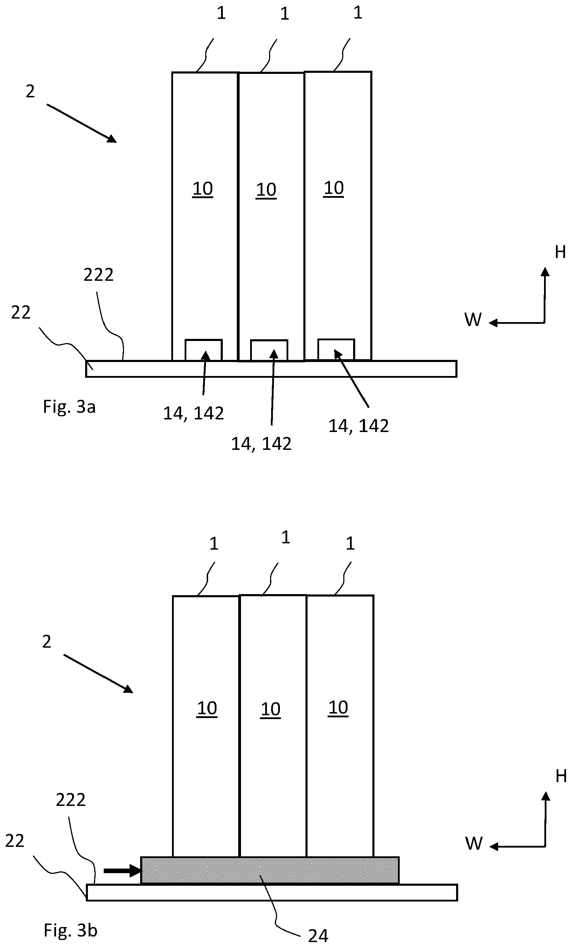

**FIG. 3a** and **FIG. 3b** show side views of examples of battery assemblies 2 according to the present disclosure. The battery assembly 2 comprises at least two prismatic battery cells 1 which are arranged side-by-side to each other, wherein each one of the at least two prismatic battery cells 1 is a prismatic battery cell according to any one of the examples of the first aspect of the disclosure. In the shown examples, there are three prismatic battery cells 1 arranged side-by-side to each other.

As further shown, the battery assembly 2 may further comprise a bottom support member 22, wherein the bottom end sections 12 of the at least two prismatic battery cells 1 are supported by a support surface 222 of the bottom support member 22. For example, the bottom support member 22 may be a floor section of an electric energy storage system (not shown).

At least two prismatic battery cells 1 of the at least two prismatic battery cells 1, forming a first set of prismatic battery cells 1, may as shown be arranged side-by-side to each other such that their recesses 14 for coolant form substantially parallel coolant flows. In these examples, the first set of prismatic battery cells 1 is formed by three prismatic battery cells 1. It shall be noted that any number of at least two or more prismatic battery cells 1 may be arranged in this manner.

As shown in FIG. 3b, the battery assembly 2 may further comprise at least one first coolant distribution member 24 located proximate the inlet portions 142 of the first set of prismatic battery cells 1, wherein the first coolant distribution member 24 is configured to supply coolant to the inlet portions 142 of the first set of prismatic battery cells 1.

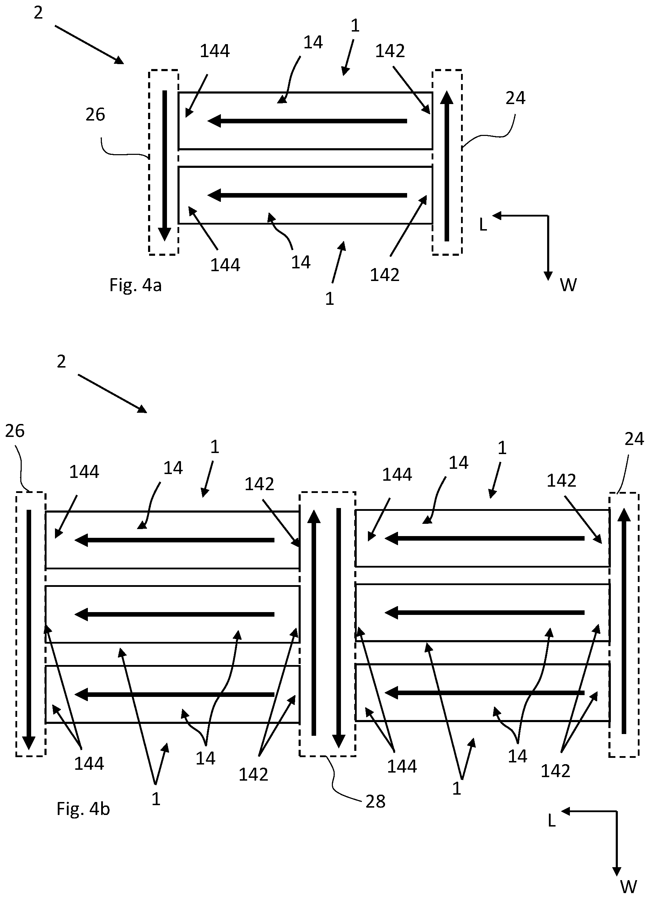

**FIGS. 4a****-c** show schematic views of battery assemblies 2 according to the present disclosure from above. More specifically, FIGS. 4a-c show flow directions (indicated by flow arrows) of coolant flows passing through the recesses 14 for coolant.

In FIG. 4a, a battery assembly 2 comprising two prismatic battery cells 1 which are arranged side-by-side to each other is shown. More specifically, in this example, the two prismatic battery cells 1 are arranged side-by-side to each other such that their recesses 14 for coolant form substantially parallel coolant flows. Further, a first coolant distribution member 24 located proximate the inlet portions 142 of the first set of prismatic battery cells 1 is also shown.

As further shown, the battery assembly 2 may further comprise at least one second coolant distribution member 26 located proximate the outlet portions 144 of the first set of prismatic battery cells 1, wherein the second coolant distribution member 26 is configured to discharge coolant from the outlet portions 144 of the first set of prismatic battery cells 1. As further shown, the first coolant distribution member 24 and/or the second coolant distribution member 26 may be configured such that a coolant flow therein is arranged to flow in a direction which is substantially perpendicular to coolant flow directions in the recesses 14 for coolant of the at least two prismatic battery cells 1 of the battery assembly 2.

FIG. 4b shows another example of a battery assembly 2. In this example, six prismatic battery cells 1 are shown. The three prismatic battery cells 1 to the right in the figure form a first set of battery cells, arranged side-by-side to each other such that their recesses 14 for coolant form substantially parallel coolant flows. The three prismatic battery cells 1 to the left in the figure form a second set of prismatic battery cells 1. The prismatic battery cells 1 of the second set are arranged side-by-side to each other such that their recesses 14 for coolant form substantially parallel coolant flows. Further, as shown, the first and second sets of prismatic battery cells 1 may be arranged such that the outlet portions 144 of the first set of prismatic battery cells 1 are facing the inlet portions 142 of the second set of prismatic battery cells 1.

As further shown in FIG. 4b, the battery assembly 2 may further comprise at least one intermediate common coolant distribution member 28 for the first and second sets of prismatic battery cells 1 which is located in-between the first and second sets of prismatic battery cells 1. The intermediate common coolant distribution member 28 may as shown be configured to discharge coolant from the outlet portions 144 of the first set of prismatic battery cells 1 and to supply coolant to the inlet portions 142 of the second set of prismatic battery cells 1. As further shown, the intermediate common coolant distribution member 28 may be configured such that coolant flow therein is arranged to flow in directions which are substantially perpendicular to coolant flow directions in the recesses 14 for coolant of the prismatic battery cells 1 of the battery assembly 2.

The coolant as mentioned herein may e.g., be water based, oil based, or the like.

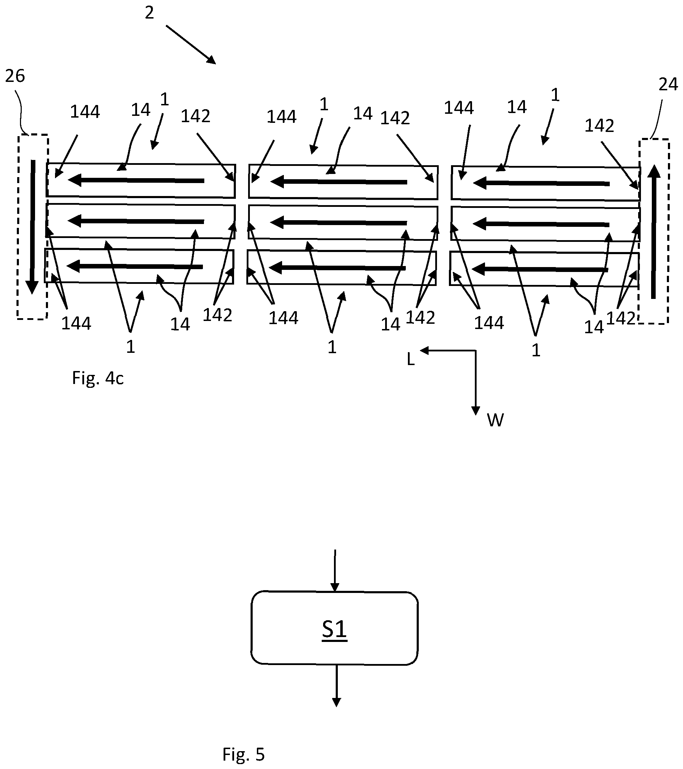

FIG. 4c shows a yet further example of a battery assembly 2. In this example, there are nine prismatic battery cells 1. As shown in this example, a first set of three prismatic battery cells to the right in the figure are arranged side-by-side to each other such that their recesses 14 for coolant form substantially parallel coolant flows. Similar configuration is also shown for a second set of three prismatic battery cells in the middle of the figure, and also for a third set of three prismatic battery cells to the left in the figure. Further, as shown, the battery assembly 2 may further comprise a first coolant distribution member 24 which is configured to supply coolant to the inlet portions 142 of the first set of prismatic battery cells 1. Still further, as shown, the battery assembly 2 may further comprise a second coolant distribution member 26 which is configured to which is configured to discharge coolant from the outlet portions 144 of the third set of prismatic battery cells 1. Accordingly, coolant distribution members for supply and discharge may be located proximate any one of the inlets/outlets of the different sets of prismatic battery cells 1.

As further shown in FIG. 4c, at least two prismatic battery cells 1 of the at least two prismatic battery cells 1 may be arranged side-by-side to each other such that their recesses 14 for coolant form a substantially aligned coolant flow therebetween. In the shown example, the aligned coolant flow is present between prismatic battery cells 1 of the first and second sets of prismatic battery cells 1, and also between the second and third sets of prismatic battery cells 1. Accordingly, in some examples, there may be a direct flow connection between two adjacent prismatic battery cells 1.

**FIG. 5** shows a flowchart of a method according to an example of the present disclosure. A method for manufacturing a prismatic battery cell according to the first aspect of disclosure is shown, wherein the method comprises:
S 1: impact extruding a piece of material so that an outer casing 10 of a prismatic battery cell 1 according to an example of the first aspect of the disclosure is formed.

In the following, possible features and feature combinations of the present disclosure are recited as a list of Examples:
Example 1: A prismatic battery cell (1) for an electric energy storage system (3), the prismatic battery cell extending in a longitudinal direction (L), a width direction (W) and a height direction (H), the prismatic battery cell (1) comprising:
   - an outer casing (10) for enclosing an electrochemical cell, the outer casing (10) having a longitudinal extension (L1) in the longitudinal direction (L) and a width extension (W1) in the with direction (W),

   wherein the outer casing (10) comprises a bottom end section (12), as seen in the height direction (H), wherein the longitudinal extension (L1) of the outer casing (10) is longer than the width extension (W1) of the outer casing (10), as seen in a sectional plane at the bottom end section (12) which is perpendicular to the height direction (H),
   wherein the bottom end section (12) comprises a recess (14) for coolant,
   wherein the recess (14) for coolant is having a coolant inlet portion (142) and a coolant outlet portion (144),
   wherein the coolant inlet portion (142) is located at a first end side (122) of the bottom end section (12) and the coolant outlet portion (144) is located at an opposite second end side (124) of the bottom end section (12), as seen in the longitudinal direction (L), and wherein the recess (14) for coolant extends in the longitudinal direction (L) from the coolant inlet portion (142) to the coolant outlet portion (144).
Example 2: The prismatic battery cell (1) according to Example 1, wherein the bottom end section (12) comprises a first wall segment (126) and a second wall segment (128), wherein each one of the first and second wall segments extends in the longitudinal direction (L) between the first end side (122) and the second end side (124) and wherein the first and second wall segments (126, 128) are offset from each other in the width direction (W) such that the first and second wall segments (126, 128) define the recess (14) for coolant therebetween.
Example 3: The prismatic battery cell (1) according to Example 2, wherein the first and second wall segments are respective outer wall segments of the outer casing (10).
Example 4: The prismatic battery cell (1) according to any one of Examples 2-3, wherein the bottom end section (12) comprises at least one intermediate wall segment (130), wherein the at least one intermediate wall segment (130) extends in the longitudinal direction (L) between the first end side (122) and the second end side (124) and wherein the at least intermediate wall segment (130) is located in-between the first and second wall segments (126, 128), as seen in the width direction (W), such that the recess (14) for coolant comprises two or more sub-recesses for coolant.
Example 5: The prismatic battery cell (1) according to any one of the preceding Examples, wherein the bottom end section (12) comprises at least one sealing element (132) configured to seal the recess (14) for coolant along the longitudinal direction (L) with respect to a support surface (222) when the bottom end section (12) is supported on the support surface (222).
Example 6: The prismatic battery cell (1) according to Example 5, when also being dependent on any one of Examples 2-4, wherein the at least one sealing element (132) is provided on a bottom portion of the first and/or second wall segment (126, 128).
Example 7: The prismatic battery cell (1) according to Example 6, wherein the at least one sealing element (132) is provided in a sealing element recess (1322) of the bottom portion.
Example 8: The prismatic battery cell (1) according to any one of the preceding Examples, wherein the outer casing (10) comprises four side walls (16, 16') for enclosing the electrochemical cell, wherein the four side walls (16, 16') extend in the height direction (H) between the bottom end section (12) and a top section (18) of the prismatic battery cell (1), wherein the four side walls (16, 16') and the bottom end section (12) are made of one single piece of material.
Example 9: The prismatic battery cell (1) according to Example 8, wherein the outer casing (10) is made by impact extrusion.
Example 10: A battery assembly (2) for an electric energy storage system (3), the battery assembly (2) comprising at least two prismatic battery cells (1) which are arranged side-by-side to each other, wherein each one of the at least two prismatic battery cells (1) is a prismatic battery cell according to any one of the preceding Examples.
Example 11: The battery assembly (2) according to Example 10, further comprising a bottom support member (22), wherein the bottom end sections (12) of the at least two prismatic battery cells (1) are supported by a support surface (222) of the bottom support member (22).
Example 12: The battery assembly (2) according to any one of Examples 10-11, wherein at least two prismatic battery cells (1) of the at least two prismatic battery cells (1), forming a first set of prismatic battery cells (1), are arranged side-by-side to each other such that their recesses (14) for coolant form substantially parallel coolant flows.
Example 13: The battery assembly (2) according to Example 12, further comprising at least one first coolant distribution member (24) located proximate the inlet portions (142) of the first set of prismatic battery cells (1), wherein the first coolant distribution member (24) is configured to supply coolant to the inlet portions (142) of the first set of prismatic battery cells (1).
Example 14: The battery assembly (2) according to any one of Examples 12-13, further comprising at least one second coolant distribution member (26) located proximate the outlet portions (144) of the first set of prismatic battery cells (1), wherein the second coolant distribution member (26) is configured to discharge coolant from the outlet portions (144) of the first set of prismatic battery cells (1).
Example 15: The battery assembly (2) according to any one of Examples 12-14, wherein at least two prismatic battery cells (1) in addition to the first set of prismatic battery cells (1), forming a second set of prismatic battery cells (1), are arranged side-by-side to each other such that their recesses (14) for coolant form substantially parallel coolant flows, and wherein the first and second sets of prismatic battery cells (1) are arranged such that the outlet portions (144) of the first set of prismatic battery cells (1) are facing the inlet portions (142) of the second set of prismatic battery cells (1).
Example 16: The battery assembly (2) according to Example 15, further comprising at least one intermediate common coolant distribution member (28) for the first and second sets of prismatic battery cells (1) which is located in-between the first and second sets of prismatic battery cells (1), wherein the intermediate common coolant distribution member (28) is configured to discharge coolant from the outlet portions (144) of the first set of prismatic battery cells (1) and to supply coolant to the inlet portions (142) of the second set of prismatic battery cells (1).
Example 17: The battery assembly (2) according to any one of Examples 10-16, wherein at least two prismatic battery cells (1) of the at least two prismatic battery cells (1) are arranged side-by-side to each other such that their recesses (14) for coolant form a substantially aligned coolant flow therebetween.
Example 18: An electric energy storage system (3), comprising a prismatic battery cell (1) according to any one of Examples 1-9 and/or a battery assembly (2) according to any one of Examples 10-17.
Example 19: A vehicle (4) comprising an electric energy storage system (3) according to Example 18.
Example 20: A method for manufacturing a prismatic battery cell (1) according to any one of Examples 1-9, wherein the method comprises:
   - impact extruding (S1) a piece of material so that an outer casing (10) of a prismatic battery cell (1) according to any one of Examples 1-9 is formed.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A prismatic battery cell (1) for an electric energy storage system (3), the prismatic battery cell extending in a longitudinal direction (L), a width direction (W) and a height direction (H), the prismatic battery cell (1) comprising:
- an outer casing (10) for enclosing an electrochemical cell, the outer casing (10) having a longitudinal extension (L1) in the longitudinal direction (L) and a width extension (W1) in the with direction (W),
wherein the outer casing (10) comprises a bottom end section (12), as seen in the height direction (H), wherein the longitudinal extension (L1) of the outer casing (10) is longer than the width extension (W1) of the outer casing (10), as seen in a sectional plane at the bottom end section (12) which is perpendicular to the height direction (H),
wherein the bottom end section (12) comprises a recess (14) for coolant,
wherein the recess (14) for coolant is having a coolant inlet portion (142) and a coolant outlet portion (144),
wherein the coolant inlet portion (142) is located at a first end side (122) of the bottom end section (12) and the coolant outlet portion (144) is located at an opposite second end side (124) of the bottom end section (12), as seen in the longitudinal direction (L), and wherein the recess (14) for coolant extends in the longitudinal direction (L) from the coolant inlet portion (142) to the coolant outlet portion (144).

2. The prismatic battery cell (1) according to claim 1, wherein the bottom end section (12) comprises a first wall segment (126) and a second wall segment (128), wherein each one of the first and second wall segments extends in the longitudinal direction (L) between the first end side (122) and the second end side (124) and wherein the first and second wall segments (126, 128) are offset from each other in the width direction (W) such that the first and second wall segments (126, 128) define the recess (14) for coolant therebetween.

3. The prismatic battery cell (1) according to claim 2, wherein the first and second wall segments are respective outer wall segments of the outer casing (10).

4. The prismatic battery cell (1) according to any one of claims 2-3, wherein the bottom end section (12) comprises at least one intermediate wall segment (130), wherein the at least one intermediate wall segment (130) extends in the longitudinal direction (L) between the first end side (122) and the second end side (124) and wherein the at least intermediate wall segment (130) is located in-between the first and second wall segments (126, 128), as seen in the width direction (W), such that the recess (14) for coolant comprises two or more sub-recesses for coolant.

5. The prismatic battery cell (1) according to any one of the preceding claims, wherein the outer casing (10) comprises four side walls (16, 16') for enclosing the electrochemical cell, wherein the four side walls (16, 16') extend in the height direction (H) between the bottom end section (12) and a top section (18) of the prismatic battery cell (1), wherein the four side walls (16, 16') and the bottom end section (12) are made of one single piece of material.

6. A battery assembly (2) for an electric energy storage system (3), the battery assembly (2) comprising at least two prismatic battery cells (1) which are arranged side-by-side to each other, wherein each one of the at least two prismatic battery cells (1) is a prismatic battery cell according to any one of the preceding claims.

7. The battery assembly (2) according to claim 6, further comprising a bottom support member (22), wherein the bottom end sections (12) of the at least two prismatic battery cells (1) are supported by a support surface (222) of the bottom support member (22).

8. The battery assembly (2) according to any one of claims 6-7, wherein at least two prismatic battery cells (1) of the at least two prismatic battery cells (1), forming a first set of prismatic battery cells (1), are arranged side-by-side to each other such that their recesses (14) for coolant form substantially parallel coolant flows.

9. The battery assembly (2) according to claim 8, further comprising at least one first coolant distribution member (24) located proximate the inlet portions (142) of the first set of prismatic battery cells (1), wherein the first coolant distribution member (24) is configured to supply coolant to the inlet portions (142) of the first set of prismatic battery cells (1).

10. The battery assembly (2) according to any one of claims 8-9, further comprising at least one second coolant distribution member (26) located proximate the outlet portions (144) of the first set of prismatic battery cells (1), wherein the second coolant distribution member (26) is configured to discharge coolant from the outlet portions (144) of the first set of prismatic battery cells (1).

11. The battery assembly (2) according to any one of claims 8-10, wherein at least two prismatic battery cells (1) in addition to the first set of prismatic battery cells (1), forming a second set of prismatic battery cells (1), are arranged side-by-side to each other such that their recesses (14) for coolant form substantially parallel coolant flows, and wherein the first and second sets of prismatic battery cells (1) are arranged such that the outlet portions (144) of the first set of prismatic battery cells (1) are facing the inlet portions (142) of the second set of prismatic battery cells (1).

12. The battery assembly (2) according to claim 11, further comprising at least one intermediate common coolant distribution member (28) for the first and second sets of prismatic battery cells (1) which is located in-between the first and second sets of prismatic battery cells (1), wherein the intermediate common coolant distribution member (28) is configured to discharge coolant from the outlet portions (144) of the first set of prismatic battery cells (1) and to supply coolant to the inlet portions (142) of the second set of prismatic battery cells (1).

13. The battery assembly (2) according to any one of claims 6-12, wherein at least two prismatic battery cells (1) of the at least two prismatic battery cells (1) are arranged side-by-side to each other such that their recesses (14) for coolant form a substantially aligned coolant flow therebetween.

14. An electric energy storage system (3), comprising a prismatic battery cell (1) according to any one of claims 1-5 and/or a battery assembly (2) according to any one of claims 6-13.

15. A vehicle (4) comprising an electric energy storage system (3) according to claim 14.
